# FASCICULE DE BREVET EUROPEEN

(11) **EP 2 679 489 B1**
(45) Date de publication et mention de la délivrance du brevet: **22.02.2017**
(21) Numéro de dépôt: 13172494.0
(22) Date de dépôt: 18.06.2013
(51) Int. Cl.: B64C 25/42

(54) **Procédé de déblocage d'un frein de roue d'aéronef.**
Verfahren zur Entriegelung einer Radbremse eines Luftfahrzeugs
A method of unblocking an aircraft wheel brake.

(30) Priorité: 25.06.2012 FR 1256019
(43) Date de publication de la demande: 01.01.2014
(73) Titulaire: Safran Landing Systems, 78140 Vélizy-Villacoublay (FR)
(72) Inventeur: Chico, M. Philippe, 78140 Vélizy-Villacoublay (FR)
(74) Mandataire: Parzy, Benjamin Alain

(56) Documents cités:
- EP-A1- 1 498 332
- GB-A- 2 450 981
- US-B1- 6 296 325

## Description

L'invention concerne un procédé de déblocage d'un frein de roue d'aéronef équipé d'au moins un actionneur électromécanique comprenant au moins un moteur électrique et un poussoir déplaçable.

### ARRIERE PLAN DE L'INVENTION

Le développement de l'aéronef « plus électrique » est un des enjeux majeurs des politiques de recherche et d'innovation mises en oeuvre par l'industrie aéronautique. L'énergie électrique offre de nombreux avantages par rapport à l'énergie mécanique, hydraulique ou pneumatique, parmi lesquels une intégration des systèmes et équipements améliorée, des coûts de maintenance réduits, une simplification d'utilisation, une réduction de masse, etc.

Le développement des systèmes électriques a entraîné une multiplication des équipements électriques et électromécaniques qui, pour leur alimentation, nécessitent une alimentation électrique (réseau électrique, batteries).

Ainsi, dans un système de freinage électrique, un frein de roue d'un aéronef comporte au moins un actionneur électromécanique qui comprend un poussoir actionné par un moteur électrique pour appliquer sélectivement un effort sur des éléments de friction du frein. En vue d'immobiliser l'aéronef, on place le poussoir de l'actionneur dans une position dans laquelle il exerce sur les éléments de friction un effort commandé puis on bloque le poussoir dans cette position de sorte qu'il continue à exercer un effort de parc sur les éléments de friction. L'actionneur est généralement muni pour cela d'un organe de blocage actionnable électriquement.

Un procédé de déblocage d'un frein électromécanique du type qui précède est décrit dans le document EP-A-1498332, pris à base du préambule de la revendication 1.

Il est nécessaire de pouvoir débloquer le frein en toute circonstance, même lorsque l'aéronef est à l'arrêt et que l'alimentation électrique est indisponible.

### OBJET DE L'INVENTION

L'invention a pour objet de permettre le déblocage d'un frein de roue d'aéronef même lorsque l'alimentation électrique de l'aéronef est indisponible.

### RESUME DE L'INVENTION

En vue de la réalisation de ce but, on propose un procédé de déblocage d'un frein de roue d'aéronef mis en oeuvre par un opérateur au sol, le frein équipé d'au moins un actionneur électromécanique comprenant au moins un moteur électrique et un poussoir déplaçable sous l'action du moteur en regard d'éléments de friction du frein pour appliquer sélectivement un effort de freinage sur les éléments de friction, l'actionneur étant muni d'un organe de blocage pour bloquer le poussoir en position au moins après que l'actionneur ait été commandé pour appliquer un effort de freinage de parc. Selon l'invention, le procédé de déblocage comporte les étapes de :
- connecter sur le frein un boîtier de commande extérieur adapté à agir au moins sur l'organe de blocage de l'actionneur ;
- à l'aide du boîtier de commande extérieur, commander l'organe de blocage pour débloquer le poussoir.

Ainsi, pour débloquer le frein, on propose d'amener à proximité du frein le boîtier de commande extérieur, et de le connecter au frein pour débloquer le poussoir. On peut munir ce boîtier de commande extérieur de sa propre source d'énergie (batterie, etc.), mais il est aussi possible de le connecter à une source d'énergie extérieure à l'aéronef et au boîtier. Ainsi, le déblocage du poussoir est possible, même en cas d'indisponibilité de l'alimentation électrique de l'aéronef. L'augmentation de coût est relativement peu importante, car un unique boîtier de commande est suffisant pour débloquer tous les freins des roues de l'aéronef.

On propose aussi un frein de roue d'aéronef comportant au moins un actionneur électromécanique comprenant au moins un moteur électrique et un poussoir déplaçable, sous l'action du moteur, en regard d'éléments de friction du frein pour appliquer sélectivement un effort de freinage sur les éléments de friction, l'actionneur étant muni d'un organe de blocage pour bloquer le poussoir en position au moins après que l'actionneur ait été commandé pour appliquer un effort de freinage de parc. Selon l'invention, le frein comporte des moyens de connexion additionnels qui ne sont pas utilisés en fonctionnement normal du frein et qui sont destinés à la connexion d'un boîtier de commande extérieur amené à proximité de la roue par un opérateur au sol, ledit boîtier de commande extérieur étant adapté à commander l'organe de blocage de l'actionneur pour débloquer le poussoir.

Grâce aux moyens de connexion additionnels, on peut connecter le boîtier de commande directement au frein sans déconnecter de faisceau électrique pour libérer des moyens de connexion qui seraient utilisés en fonctionnement normal.

Enfin, on propose un boîtier de commande extérieur pouvant être destiné à être amené à proximité d'une roue d'aéronef par un opérateur au sol pour permettre à l'opérateur au sol de commander un frein d'aéronef comportant au moins un actionneur électromécanique comprenant au moins un moteur électrique et un poussoir déplaçable, sous l'action du moteur, en regard d'éléments de friction du frein pour appliquer sélectivement un effort de freinage sur les éléments de friction, l'actionneur étant muni d'un organe de blocage pour bloquer le poussoir en position au moins après que l'actionneur ait été commandé pour appliquer un effort de freinage de parc, le boîtier comportant au moins une source d'énergie électrique, des moyens de connexion au frein, et des moyens de commande alimentés par la source d'énergie et adaptés à agir au moins sur l'organe de blocage du frein via les moyens de connexion au frein pour débloquer le poussoir.

Les moyens de commande du boîtier permettent donc de commander l'organe de blocage de l'actionneur en lieu et place d'organes électriques équipant l'aéronef et utilisés en fonctionnement normal.

### BREVE DESCRIPTION DES DESSINS

L'invention sera mieux comprise à la lumière de la description qui suit en référence aux figures des dessins annexés parmi lesquelles :
- la figure 1 représente une vue en coupe d'une roue équipée d'un frein à actionneurs électromécaniques, lequel frein est connecté par un faisceau électrique à un boîtier de contrôle et à un boîtier de blocage ;
- les figures 2 à 6 représentent des porte-actionneurs de freins sur lesquels sont mises en oeuvre différentes variantes du procédé de l'invention ;
- la figure 7 représente une vue détaillée d'un porte-actionneurs électromécanique d'un frein de l'invention.

### DESCRIPTION DETAILLEE DE L'INVENTION

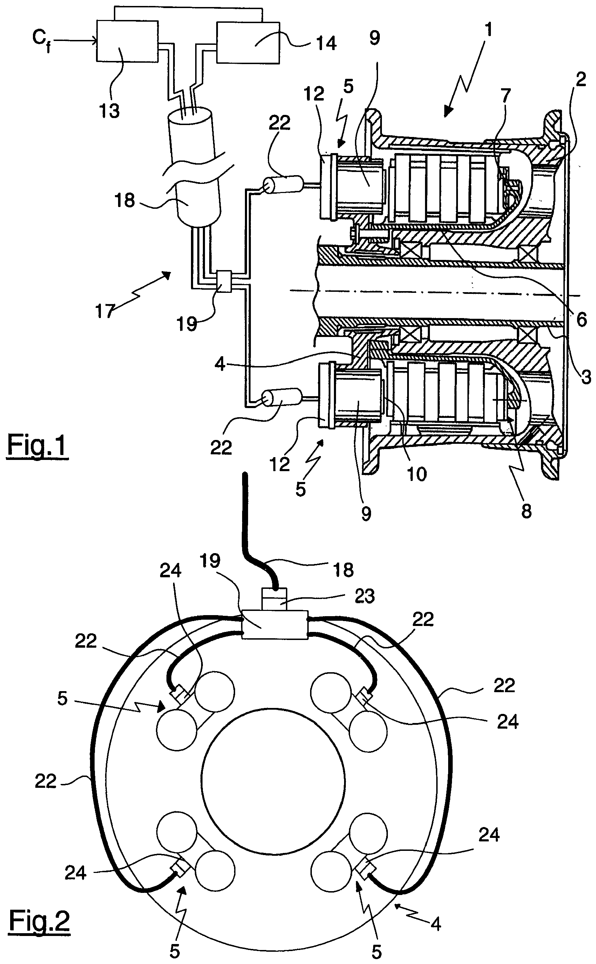

En référence aux figures 1 et 2, une roue freinée 1 d'un atterrisseur d'aéronef comporte une jante 2 adaptée à recevoir un pneumatique (non représenté ici) et montée en rotation sur un essieu 3 porté par l'atterrisseur. Sur l'essieu est monté un porte-actionneurs 4 portant des actionneurs électromécaniques 5. Sur le porte-actionneurs 4 est fixé un tube de torsion 6 qui s'étend dans la jante 2 pour se terminer par un appui 7. Le porte-actionneurs 4, et donc le tube de torsion 6, sont arrêtés en rotation vis-à-vis de l'essieu 3 par des moyens d'arrêt non représentés ici.

Entre l'appui 7 et les actionneurs 5 s'étendent des éléments de friction, ici une pile de disques 8 composée de rotors qui sont solidaires en rotation de la jante et de stators qui sont solidaires en rotation du tube de torsion.

Chacun des actionneurs 5 comporte un corps 9 dans lequel un poussoir 10 est monté pour se déplacer linéairement et de manière réversible en regard de la pile de disques 8 sous l'action d'un moteur électrique contenu dans le corps, afin d'appliquer sur la pile de disque un effort commandé de pression qui, en induisant des efforts de friction entre les rotors et les stators de la pile de disque, contribue à ralentir la rotation de la jante 2 et donc à freiner l'aéronef.

Chacun des actionneurs 5 comporte en outre un organe de blocage 12, ici un frein à manque de courant qui, lorsqu'il est alimenté, laisse libre le poussoir 10 de l'actionneur de se déplacer sous l'action du moteur électrique, mais lorsqu'il n'est plus alimenté, bloque le poussoir 10 en position. Ici, les freins à manque de courant se contentent d'une alimentation de basse tension (typiquement 28 volts).

Le moteur de chaque actionneur 5 est connecté à un boîtier de contrôle 13 de type EMAC (pour electromechanical actuator controller), et l'organe de blocage 12 de chaque actionneur 5 est connecté à un boîtier de blocage 14. Le boîtier de blocage 14 est lui-même connecté au boîtier de contrôle 13, lequel boîtier de contrôle 13 est agencé pour mettre en oeuvre un mode de freinage commandé et un mode de freinage de parc. Ici, le boîtier de contrôle 13 est situé dans une zone protégée à l'intérieur du fuselage de l'aéronef, alors que le boîtier de blocage 14 est délocalisé sur l'atterrisseur à proximité de la roue 1.

En mode de freinage commandé, le boîtier de contrôle 13 reçoit une consigne d'effort Cf de freinage générée notamment à partir de signaux provenant de pédales de frein actionnées par le pilote, et commande le moteur de chaque actionneur 5 pour déplacer le poussoir 10 de l'actionneur vis à vis de la pile de disques 8.

En mode de freinage de parc, permettant de maintenir l'aéronef immobile, le boîtier de contrôle 13 commande le moteur de chaque actionneur 5 pour que le poussoir 10 exerce sur la pile de disques 8 un effort de parc, puis envoie un ordre de blocage au boîtier de blocage 14 qui commande l'organe de blocage 12 de manière à maintenir le poussoir 10 en position. L'effort de parc est ainsi maintenu sans l'aide du moteur électrique, et donc l'alimentation électrique peut être coupée, ce qui diminue la consommation électrique du frein et évite l'échauffement des moteurs électriques.

Le moteur de chaque actionneur 5 est relié électriquement au boîtier de contrôle 13 par une liaison électrique portant des signaux de puissance à destination du moteur, et l'organe de blocage 12 de chaque actionneur est relié électriquement au boîtier de blocage par une liaison électrique portant des signaux de commande à destination de l'organe de blocage 12.

Ces liaisons électriques sont agencées dans un faisceau électrique 17 descendant le long de l'atterrisseur, le faisceau comprenant au moins un harnais de frein 18, reliant les boîtiers de contrôle 13 et de blocage 14 à un boîtier de connexion 19 monté sur le porte-actionneurs, et des câbles d'actionneur 22, chaque câble d'actionneur 22 reliant un actionneur 5 au boîtier de connexion 19. Le harnais de frein 18 est connecté au boîtier de connexion par l'intermédiaire d'un connecteur 23 du boîtier et d'un connecteur complémentaire du harnais. Les câbles d'actionneur 22 sont connectés à chaque actionneur par l'intermédiaire d'un connecteur 24 d'actionneur et d'un connecteur complémentaire du câble.

Tout ceci est bien connu et n'est rappelé que pour donner le contexte de l'invention.

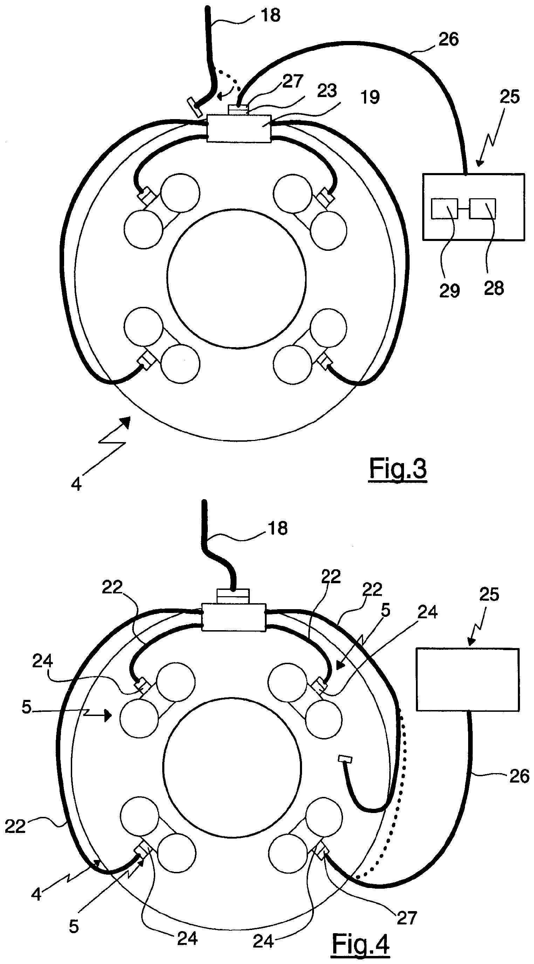

Pour débloquer les freins d'un aéronef, maintenu immobile au sol par un freinage de parc, on propose selon l'invention d'utiliser un boîtier de commande extérieur 25, visible à la figure 3, amené à proximité de chaque roue par un opérateur au sol. Le boîtier de commande 25 est adapté pour agir au moins sur l'organe de blocage 12 des actionneurs 5 pour débloquer le poussoir 10. Suite au déblocage des poussoirs 10 des actionneurs d'un frein, et grâce à la réversibilité mécanique des actionneurs et à une certaine élasticité de la pile de disques 8 ou de la structure du frein, les poussoirs 10 reculent relativement à la pile de disque ce qui débloque le frein. Une fois que tous les freins de l'aéronef ont été débloqués, celui-ci peut être déplacé.

Le boîtier de commande extérieur 25 comporte un câble 26 muni d'un connecteur 27, une batterie 28 et un module électrique de commande 29. Le module électrique de commande 29 est alimenté par la batterie 28, et est adapté à générer sélectivement un signal de commande. Ce signal de commande, ici l'alimentation basse tension d'un frein à manque de courant, permet, lorsqu'il est appliqué aux organes de blocage 12 des actionneurs 5, de débloquer les poussoirs 10 des actionneurs du frein.

Avantageusement, on prévoit que le module électrique de commande 29 soit aussi adapté à agir sur les moteurs électriques des actionneurs 5, dans le but de reculer les poussoirs 10 après que les organes de blocage 12 aient été débloqués. Ceci permet d'annuler directement l'effort de freinage en assurant qu'aucun freinage résiduel ne subsiste.

Le procédé de déblocage d'un frein de l'invention, mis en oeuvre par l'opérateur au sol pour débloquer un frein, comporte tout d'abord une étape initiale, au cours de laquelle l'opérateur déconnecte le harnais de frein 18 du boîtier de connexion 19.

L'opérateur connecte ensuite le boîtier de commande extérieur 25 au boîtier de connexion 19, en connectant le connecteur 27 du boîtier de commande extérieur 25 au connecteur 23 du boîtier de connexion 19. On note qu'ici, le connecteur 27 est complémentaire du connecteur 23.

Puis, l'opérateur commande les organes de blocage 12 des actionneurs 5 pour débloquer les poussoirs 10 des actionneurs, et agit éventuellement sur les moteurs électriques des actionneurs 5 pour faire de reculer les poussoirs 10 (si le module électrique de commande le permet).

Enfin, le procédé de déblocage de l'invention comporte une étape finale, au cours de laquelle l'opérateur déconnecte le boîtier de commande extérieur 25, puis reconnecte le harnais de frein 18 au connecteur 23 du boîtier de connexion 19.

Dans une première variante du procédé de déblocage, en référence à la figure 4, l'étape initiale consiste, pour l'opérateur, à déconnecter chaque câble d'actionneur 22 de l'actionneur 5 correspondant. L'opérateur connecte ensuite le connecteur 27 du boîtier de commande extérieur 25 au connecteur 24 d'un actionneur 5, puis commande l'organe de blocage 12 de l'actionneur 5 pour débloquer le poussoir 10, et agit éventuellement sur le moteur électrique de l'actionneur 5 pour faire reculer le poussoir 10. Ces opérations sont répétées pour chaque actionneur, l'un après l'autre. L'étape finale consiste, cette fois, à reconnecter chaque actionneur 5 au câble d'actionneur 22 correspondant.

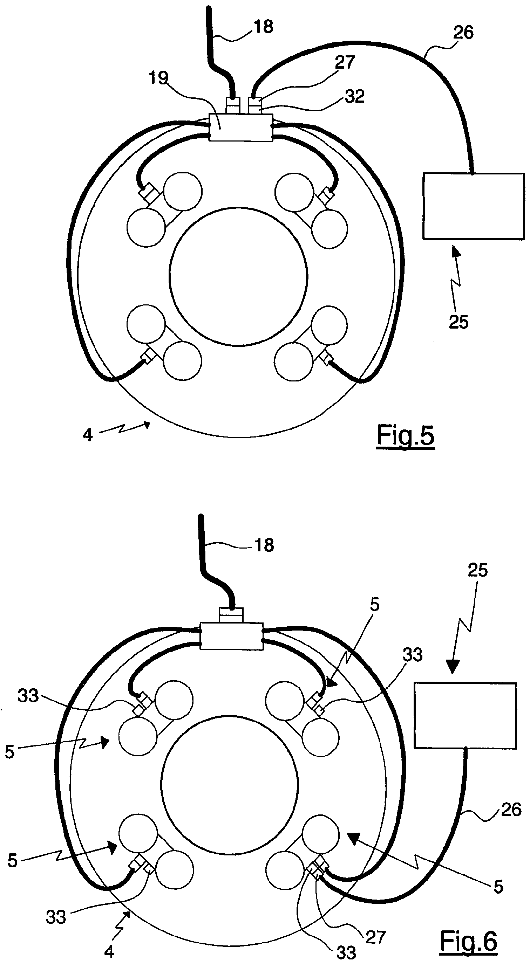

Dans une deuxième variante du procédé de déblocage, en référence à la figure 5, on ne prévoit plus d'étape initiale ni d'étape finale consistant à déconnecter puis à reconnecter un ou des harnais ou câbles connectés en fonctionnement normal. On prévoit au contraire de connecter directement le boîtier de commande extérieur 25 au frein. Pour cela, on équipe le boîtier de connexion 19 d'un connecteur additionnel 32, non utilisé en fonctionnement normal du frein. Le connecteur 27 du boîtier de commande extérieur 25 est ici complémentaire du connecteur 32. Bien sûr, lorsqu'il n'est pas utilisé, ce connecteur additionnel 32 doit être protégé de l'environnement extérieur (humidité, poussières, etc.), par exemple par un bouchon de protection qu'il est nécessaire de retirer avant de connecter le boîtier de commande extérieur.

Dans une troisième variante du procédé de déblocage, en référence à la figure 6, on prévoit cette fois d'utiliser des connecteurs additionnels 33 équipant chaque actionneur 5. Le connecteur 27 du boîtier de commande extérieur est ici complémentaire d'un connecteur additionnel 33.

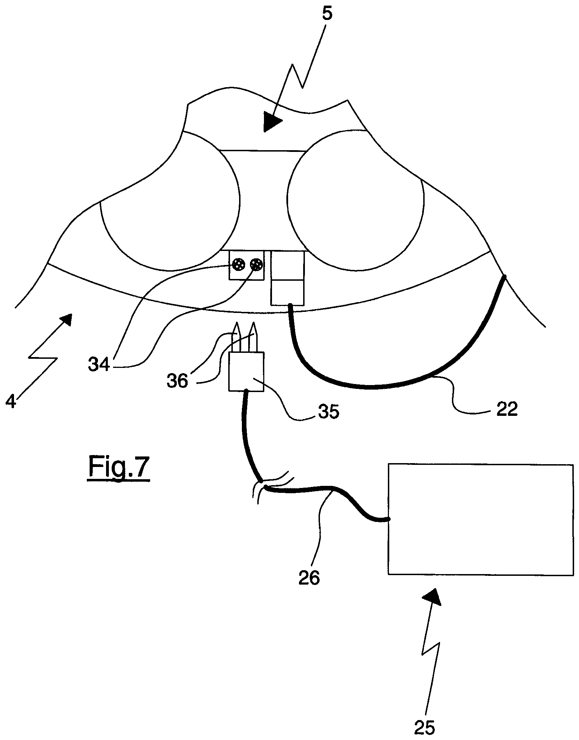

Enfin, dans une quatrième variante du procédé de déblocage, en référence à la figure 7, on prévoit de réaliser une connexion électrique entre le boîtier de connexion 25 et les actionneurs 5 par simple contact : on remplace les connecteurs additionnels 33 des actionneurs par des bornes électriques 34 réalisées ici sous la forme de pastille plates. Le boîtier de commande extérieur comprend un élément de connexion 35 muni lui aussi de deux bornes électriques 36, ici de type contact à pointe, destinées à coopérer électriquement avec les bornes électriques 34 des actionneurs 5 par simple contact. Le déblocage du poussoir est ainsi réalisé de manière simple et rapide. Il est possible, en utilisant des matériaux et procédés adaptés pour fabriquer les bornes électriques des actionneurs, de les laisser à l'air libre sans ajouter de protection particulière.

L'invention n'est pas limitée au mode de réalisation particulier et à ses variantes qui viennent d'être décrits, mais, bien au contraire, englobe toute autre variante entrant dans le cadre de l'invention tel que défini par les revendications.

Bien que l'on ait choisi d'illustrer l'invention en décrivant un frein dont les moteurs de tous les actionneurs sont pilotés par un même boîtier de contrôle et les organes de blocage sont commandés par un même boîtier de blocage, il est bien sûr possible de mettre en oeuvre l'invention dans une architecture différente. Par exemple, il est possible que des fonctions réalisées par le boîtier de contrôle et le boîtier de blocage soient réalisées par un même boîtier. De même, il est possible de prévoir que les liaisons électriques entre actionneurs et boîtier(s) soient réalisées par des harnais ou câbles agencés de manière différente. On pourrait ainsi prévoir plusieurs boîtiers de connexion par frein, ou bien prévoir de relier plusieurs freins à un même boîtier de connexion situé sur l'atterrisseur et lui-même relié aux boîtiers de contrôle et de blocage. On pourra aussi prévoir que le frein ne comporte pas de boîtier de connexion. Dans ce cas, les câbles d'actionneurs sont supprimés et le harnais de frein est directement connecté aux actionneurs du frein, et c'est ce harnais de frein qui est déconnecté puis reconnecté au cours de l'étape initiale et de l'étape finale.

L'invention s'applique bien sûr à un frein équipé d'un nombre quelconque d'actionneurs (et notamment à un frein équipé d'un unique actionneur).

Bien que l'on ait choisi un frein à manque de courant comme organe de blocage, il est bien sûr possible d'utiliser un organe de blocage différent, à condition qu'il soit actionnable électriquement.

## Revendications

1. Procédé de déblocage d'un frein de roue d'aéronef mis en oeuvre par un opérateur au sol, le frein étant équipé d'au moins un actionneur électromécanique (5) comprenant au moins un moteur électrique et un poussoir (10) déplaçable sous l'action du moteur en regard d'éléments de friction (8) du frein pour appliquer sélectivement un effort de freinage sur les éléments de friction (8), l'actionneur (5) étant muni d'un organe de blocage (12) pour bloquer le poussoir (10) en position au moins après que l'actionneur ait été commandé pour appliquer un effort de freinage de parc, **caractérisé en ce que** le procédé de déblocage comporte les étapes de :
- connecter sur le frein un boîtier de commande extérieur (25) amené à proximité de la roue par l' opérateur au sol, ledit boîtier de commande extérieur étant adapté à agir au moins sur l'organe de blocage (12) de l'actionneur ;
- à l'aide du boîtier de commande extérieur (25), commander l'organe de blocage (12) pour débloquer le poussoir (10).

2. Procédé de déblocage selon la revendication 1, dans lequel le boîtier de commande (25) est en outre adapté à agir sur le moteur de l'actionneur pour déplacer le poussoir (10), et comportant l'étape de faire reculer le poussoir (10) à l'aide du boîtier de commande extérieur (25).

3. Procédé de déblocage selon la revendication 1, comportant, outre les étapes précitées :
- une étape initiale consistant à déconnecter du frein un faisceau électrique (17) descendant le long de l'atterrisseur afin de permettre la connexion sur le frein du boîtier de commande extérieur (25) en lieu et place du faisceau électrique (17);
- une étape finale consistant à déconnecter le boîtier de commande extérieur (25) et à reconnecter le faisceau électrique (17) sur le frein.

4. Procédé de déblocage selon la revendication 1, dans lequel le boîtier de commande extérieur (25) comprend une source d'énergie électrique (28) utilisable pour alimenter le frein lors de sa commande par le boîtier de commande extérieur (25).

5. Procédé de déblocage selon la revendication 1, dans lequel on connecte le boîtier de commande extérieur (25) directement sur le frein.

6. Frein de roue d'aéronef comportant au moins un actionneur électromécanique (5) comprenant au moins un moteur électrique et un poussoir (10) déplaçable, sous l'action du moteur, en regard d'éléments de friction (8) du frein pour appliquer sélectivement un effort de freinage sur les éléments de friction (8), l'actionneur (5) étant muni d'un organe de blocage (12) pour bloquer le poussoir (10) en position au moins après que l'actionneur ait été commandé pour appliquer un effort de freinage de parc, **caractérisé en ce que** le frein comporte des moyens de connexion additionnels (32, 33, 34) qui ne sont pas utilisés en fonctionnement normal du frein et qui sont destinés à la connexion d'un boîtier de commande extérieur (25) amené à proximité de la roue par un opérateur au sol, ledit boîtier de commande extérieur étant adapté à commander l'organe de blocage (12) de l'actionneur pour débloquer le poussoir (10).

7. Frein de roue d'aéronef selon la revendication 6, dans lequel les moyens de connexion additionnels comportent au moins deux bornes électriques (34) destinées à coopérer électriquement par simple contact avec des bornes électriques (36) du boîtier de commande extérieur (25).

8. Boîtier de commande extérieur pouvant être destiné à être amené à proximité d'une roue d'aéronef par un opérateur au sol pour permettre à l'opérateur au sol de commander un frein de la roue, le frein comportant au moins un actionneur électromécanique (5) comprenant au moins un moteur électrique et un poussoir (10) déplaçable, sous l'action du moteur, en regard d'éléments de friction (8) du frein pour appliquer sélectivement un effort de freinage sur les éléments de friction (8), l'actionneur étant muni d'un organe de blocage (12) pour bloquer le poussoir (10) en position au moins après que l'actionneur ait été commandé pour appliquer un effort de freinage de parc, le boîtier (25) comportant au moins une source d'énergie électrique (28), des moyens de connexion au frein (26, 27), et des moyens de commande (29) alimentés par la source d'énergie (28) et adaptés à agir au moins sur l'organe de blocage (12) du frein via les moyens de connexion au frein pour débloquer le poussoir (10) .

## Patentansprüche

1. Verfahren zum Lösen einer Flugzeugradbremse, das von einer Bedienperson am Boden durchgeführt wird, wobei die Bremse mit mindestens einem elektromechanischen Aktor (5) ausgestattet ist, der mindestens einen Elektromotor und einen Stößel (10) umfasst, der unter der Wirkung des Motors gegenüber Reibelementen (8) der Bremse verschiebbar ist, um selektiv eine Bremskraft auf die Reibelemente (8) auszuüben, wobei der Aktor (5) mit einem Blockierelement (12) versehen ist, um den Stößel (10) in seiner Position zu blockieren, zumindest nachdem der Aktor betätigt wurde, um eine Parkbremskraft auszuüben, **dadurch gekennzeichnet, dass** das Verfahren zum Lösen die Schritte umfasst:
- Verbinden eines äußeren Steuerkastens (25), der von der Bedienperson am Boden in die Nähe des Rades gebracht wird, mit der Bremse, wobei der äußere Steuerkasten dazu geeignet ist, mindestens auf das Blockierelement (12) des Aktors einzuwirken;
- Steuern des Blockierelements (12) mit Hilfe des äußeren Steuerkastens (25), um den Stößel (10) zu lösen.

2. Verfahren zum Lösen nach Anspruch 1, bei dem der Steuerkasten (25) ferner dazu geeignet ist, auf den Motor des Aktors einzuwirken, um den Stößel (10) zu verschieben, und umfassend den Schritt des Zurückschiebens des Stößels (10) mittels des äußeren Steuerkastens (25).

3. Verfahren zum Lösen nach Anspruch 1, umfassend neben den vorgenannten Schritten:
- einen initialen Schritt, der darin besteht, einen Kabelbaum (17), der sich entlang des Fahrwerks erstreckt, von der Bremse zu lösen, um anstelle des Kabelbaums (17) die Verbindung des äußeren Steuerkastens (25) mit der Bremse zu gestatten;
- einen finalen Schritt, der darin besteht, den äußeren Steuerkasten (25) zu lösen und den Kabelbaum (17) wieder mit der Bremse zu verbinden.

4. Verfahren zum Lösen nach Anspruch 1, bei dem der äußere Steuerkasten (25) eine Quelle (28) elektrischer Energie umfasst, die nutzbar ist, um die Bremse bei ihrer Steuerung durch den äußeren Steuerkasten (25) zu speisen.

5. Verfahren zum Lösen nach Anspruch 1, bei dem der äußere Steuerkasten (25) direkt mit der Bremse verbunden wird.

6. Flugzeugradbremse, umfassend mindestens einen elektromechanischen Aktor (5), der mindestens einen Elektromotor und einen Stößel (10) umfasst, der unter der Wirkung des Motors gegenüber Reibelementen (8) der Bremse verschiebbar ist, um selektiv eine Bremskraft auf die Reibelemente (8) auszuüben, wobei der Aktor (5) mit einem Blockierelement (12) versehen ist, um den Stößel (10) in seiner Position zu blockieren, zumindest nachdem der Aktor betätigt wurde, um eine Parkbremskraft auszuüben, **dadurch gekennzeichnet, dass** die Bremse zusätzliche Verbindungsmittel (32, 33, 34) umfasst, die bei normalem Betrieb der Bremse nicht verwendet werden und die zum Anschluss eines äußeren Steuerkastens (25) bestimmt sind, der von einer Bedienperson am Boden in die Nähe des Rades gebracht wird, wobei der äußere Steuerkasten dazu geeignet ist, das Blockierelement (12) des Aktors zu steuern, um den Stößel (10) zu lösen.

7. Flugzeugradbremse nach Anspruch 6, bei der die zusätzlichen Verbindungsmittel mindestens zwei elektrische Anschlüsse (34) umfassen, die dazu bestimmt sind, durch einfachen Kontakt mit elektrischen Anschlüssen (36) des äußeren Steuerkastens (25) elektrisch zusammenzuwirken.

8. Äußerer Steuerkasten, der dazu bestimmt sein kann, von einer Bedienperson am Boden in die Nähe eines Flugzeugrades gebracht zu werden, um der Bedienperson am Boden ein Steuern einer Bremse des Rades zu ermöglichen, wobei die Bremse mindestens einen elektromechanischen Aktor (5) umfasst, der mindestens einen Elektromotor und einen Stößel (10) umfasst, der unter der Wirkung des Motors gegenüber Reibelementen (8) der Bremse verschiebbar ist, um selektiv eine Bremskraft auf die Reibelemente (8) auszuüben, wobei der Aktor mit einem Blockierelement (12) versehen ist, um den Stößel (10) in seiner Position zu blockieren, zumindest nachdem der Aktor betätigt wurde, um eine Parkbremskraft auszuüben, wobei der Kasten (25) mindestens eine Quelle (28) elektrischer Energie, Verbindungsmittel (26, 27) zur Verbindung mit der Bremse und Steuermittel (29) umfasst, die von der Energiequelle (28) gespeist werden und dazu geeignet sind, mindestens auf das Blockierelement (12) der Bremse über die Verbindungsmittel zur Verbindung mit der Bremse einzuwirken, um den Stößel (10) zu lösen.

## Claims

1. A method of unblocking an aircraft wheel brake having at least one electromechanical actuator (5) with at least one electric motor and a pusher (10) movable under drive from the motor facing friction elements (8) of the brake in order to apply a braking force selectively against the friction elements (8), the actuator (5) being provided with a blocking member (12) for blocking the pusher (10) in position, at least after the actuator has been operated to apply a parking brake force, the unblocking method being **characterized in that** it comprises the steps of:
- connecting an external control unit (25) to the brake, the external control unit being brought to the proximity of the wheel by an operator on the ground and being adapted to act at least on the blocking member (12) of the actuator; and
- using the external control unit (25) to cause the blocking member (12) to unblock the pusher (10).

2. An unblocking method according to claim 1, wherein the control unit (25) is also adapted to act on the motor of the actuator to move the pusher (10), the method including a step of using the external control unit (25) to cause the pusher (10) to reverse.

3. An unblocking method according to claim 1, including, in addition to the above-mentioned steps:
- an initial step consisting in disconnecting from the brake an electrical cable bundle (17) extending along the landing gear so as to enable the external control unit (25) to be connected to the brake instead of the electrical cable bundle (17); and
- a final step consisting in disconnecting the external control unit (25) and in reconnecting the electrical cable bundle (17) to the brake.

4. An unblocking method according to claim 1, wherein the external control unit (25) has a source of electrical energy (28) suitable for powering the brake while it is being controlled by the external control unit (25).

5. An unblocking method according to claim 1, wherein the external control unit (25) is connected directly to the brake.

6. An aircraft wheel brake having at least one electromechanical actuator (5) with at least one electric motor and a pusher (10) movable under drive from the motor facing friction elements (8) of the brake in order to apply a braking force selectively against the friction elements (8), the actuator (5) being provided with a blocking member (12) for blocking the pusher (10) in position, at least after the actuator has been operated to apply a parking brake force, the brake being **characterized in that** it includes additional connection means (32, 33, 34) that are not used in normal operation of the brake and that are for connection to an external control unit (25) that is brought to the proximity of the wheel by an operator on the ground, said external control unit being adapted to control the blocking member (12) of the actuator in order to unblock the pusher (10).

7. An aircraft wheel brake according to claim 6, wherein the additional connection means comprise at least two electric terminals (34) for co-operating electrically merely by contact with electric terminals (36) of the external control unit (25).

8. An external control unit for being brought into the proximity of an aircraft wheel in order to control a brake of the wheel, the brake including at least one electromechanical actuator (5) with at least one electric motor and a pusher (10) movable under drive from the motor facing friction elements (8) of the brake in order to apply a braking force selectively against the friction elements (8), the actuator being provided with a blocking member (12) for blocking the pusher (10) in position, at least after the actuator has been operated to apply a parking brake force, the unit (25) including at least one electrical energy source (28), means (26, 27) for connection to the brake, and control means (29) powered by the energy source (28) and adapted to act at least on the blocking member (12) of the brake via the brake connection means in order to unblock the pusher (10).
